# EUROPEAN PATENT APPLICATION

(11) **EP 1 112 870 A1**
(43) Date of publication of application: **04.07.2001**
(21) Application number: 00128601.2
(22) Date of filing: 27.12.2000
(51) Int. Cl.: B60D 1/14, B60D 1/52

(54) **A closure plug for an access aperture for a towing hook on the bumper of a vehicle**

(30) Priority: 30.12.1999 IT TO990230 U
(71) Applicant: FIAT AUTO S.p.A., 10135 Torino (IT)
(72) Inventor: Beltramo, Carlo, 10136 Torino (IT); Costa, Bruno, 10029 Villastellone (IT)
(74) Representative: Eccetto, Mauro

(57) **Abstract**

A closure plug (4) for an access aperture for a towing hook on the bumper (2) of a vehicle which includes a coupling element (13) for coupling the plug (4) to the bumper (2) and a closure wall (5) for closing an aperture (3) in the bumper and including a weakened portion (9) which is resiliently deformable by the insertion of the towing hook through the closure wall (5).

## Description

The present invention relates to a closure plug for an access aperture for a towing hook on the bumper of a vehicle.

Many vehicles currently in use have a hole in the front bumper in order that a towing hook may be passed through and releasably fixed to an attachment element covered by the said bumper.

For obvious aesthetic reasons, this hole is normally covered by a plug, which is securely coupled to the bumper and removable for insertion of the towing hook. In this respect the plug has an associated element for connecting it to the bumper in order to prevent the plug being lost when the hook is in the hole and to hold the plug securely coupled to the bumper when the hook is not in the hole. For purely aesthetic reasons once again, the plug must be shaped and painted so as to blend in as closely as possible with the bumper.

Various types of plug are currently in use which, although used since they are satisfactory from an aesthetic and functional point of view, are relatively complex and particularly expensive.

The object of the present invention is to provide a closure plug, the characteristics of which make it effective, reliable and at the same time both simple and economical to manufacture.

This object is achieved by providing a closure plug for the access aperture for a towing hook on the bumper of a motor vehicle; the plug including a closure wall for closing an aperture in the bumper and coupling means for coupling to a portion of the bumper, characterised in that the said closure wall includes a weakened portion resiliently deformable on insertion of the said towing hook through the said closure wall.

Further characteristics of the present invention will become apparent from the description which follows of a non-limitative example of an embodiment thereof, with reference to the appended drawings, in which:
Figure 1 is a perspective view of a preferred embodiment of the plug of the invention mounted on the front bumper of a vehicle;
Figure 2 is an enlarged front view of the plug of Figure 1; and
Figure 3 is a section taken on the line III-III of Figure 2.

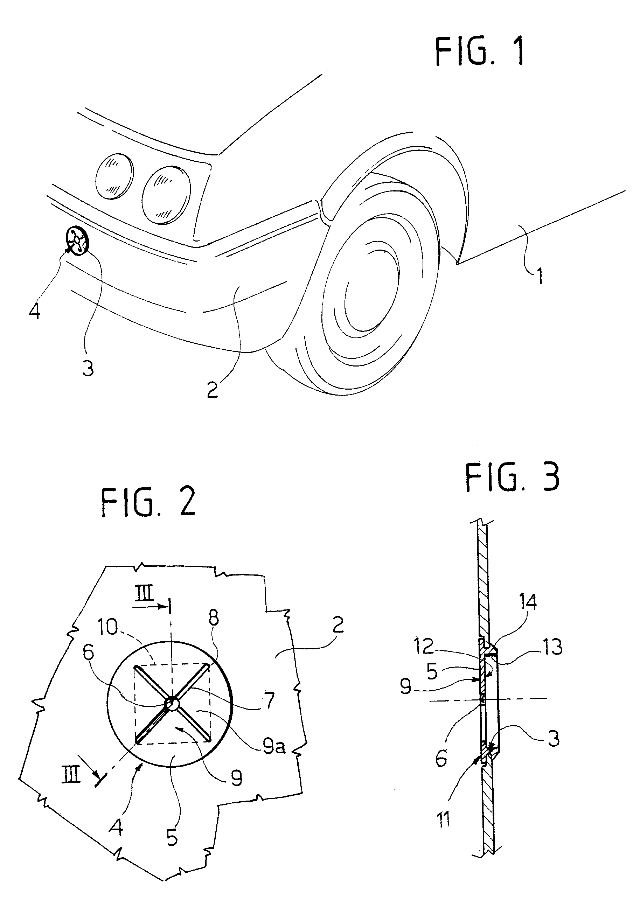

Figure 1 shows a motor vehicle 1 which includes a bumper 2 with an aperture 3 formed therein for passing a towing hook (not shown) through and closed by a plug 4.

As shown in Figure 2, the plug 4 has a substantially disc structure which includes a sheet like closure wall 5 being of a circular shape and thinner than other portions of the plug and having a central aperture 6 and four slots 7 extending radially from the said central aperture 6. The outer ends 8 of the four slots 7 are within the wall 5 and form a weakened central portion constituted by four substantially triangular resilient portions 9a, each defined by two slots 7 and by a fold line 10 extending between the two ends 8 of the two slots 7.

As shown in Figure 3, the plug 1 also includes an annular, peripheral attachment portion 11 projecting orthogonally from a perimeter portion 12 of the closure wall 5 and carrying an annular tooth 13, facing outwardly parallel to the said closure wall 5 and operable, in use, to engage a rim 14 of the aperture 3 so as to ensure that the plug 1 is secured to the bumper 2. The plug 1 is of the same colour as the bumper on which it is mounted, this being conveniently achieved by body colouring or, alternatively, by moulding a coloured layer or film together with the bumper.

In use, starting from a closed operating position, in which the plug 4 covers the aperture 3 and the portions 9a are flush with the bumper 2, the towing hook is pushed against the closure wall 5 at the site of the central aperture 6. As a result of this, the portions 9a are engaged by the hook and bend inwardly just sufficiently to allow the towing hook to pass through and couple with the engagement element provided (known and not illustrated). When the user wants to remove the hook, he disengages it from the attachment element and extracts it through the plug 4, thereby releasing the portions 9a and returning them to the operating position in which they cover the aperture 3.

It is clear that, since the plug 4 of the invention retains its place on the bumper whether or not the towing hook is engaged through the hole, it avoids the need for extra fixing means, which are required in the prior art to ensure that the plug remains connected to the vehicle even when it is not covering the aperture 3.

In addition, the plug 4 is aesthetically satisfactory since, in its closed position, only the slots 7 are visible.

Finally, the elasticity of the portions 9a means that the aperture 3 is covered immediately without any need for intervention.

It is evident that, the principle of the closure plug for a towing hook aperture of the invention remaining the same, modifications and variations may be made without departing thereby from the scope of the invention.

For example, the plug 4 may have a different shape to that described by way of non-limitative example, there could be a different number of slots and the central hole 6 could be dispensed with.

## Claims

1. A closure plug (4) for an access aperture for a towing hook on the bumper of a vehicle; the plug (4) including a closure wall (5) for closing an aperture (3) in the bumper and coupling means (13) for coupling to a portion (14) of the bumper (3) itself, characterised in that the said closure wall (5) includes a weakened portion (9) which is resiliently deformable on insertion of the said towing hook through the said closure wall (5).

2. A plug according to Claim 1, characterised in that the said closure wall (5) includes at least one slot (7) at least partially delimiting the said weakened portion (9).

3. A plug according to Claim 2, characterised in that the said weakened portion (9) is a substantially triangular shape.

4. A plug according to either Claim 2 or Claim 3, characterised in that the said slot (7) is a cruciform slot.

5. A plug according to Claim 4, characterised in that the said wall (5) has a central through-hole (6); the said cut having four portions (7) extending radially from the central through-hole.

6. A plug according to Claim 5, characterised in that the said coupling means include an annular rim (13) for snap engagement with the said bumper (2).

7. A plug according to any one of the preceding Claims, characterised in that the said wall (5) is substantially circular.

8. A plug according to any one of the preceding Claims, characterised in that it is body-coloured to match the bumper.

9. A plug according to any one of the preceding Claims, characterised in that it is coloured by co-moulding with it a layer to match the colour of the bumper.
